# EUROPÄISCHE PATENTSCHRIFT

(11) **EP 4 499 439 B1**
(45) Veröffentlichungstag und Bekanntmachung des Hinweises auf die Patenterteilung: **14.01.2026**
(21) Anmeldenummer: 23725633.4
(22) Anmeldetag: 05.05.2023
(51) Int. Cl.: B60L 5/28, B60L 5/04, B60L 5/36, B60L 5/16, B60L 5/18, B60L 5/24, B60L 9/18, B60L 9/24

(54) **ENERGIEVERSORGUNGSSYSTEM ZUR ENERGIEEINSPEISUNG IN EIN STRASSENFAHRZEUG**
POWER SUPPLY SYSTEM FOR SUPPLYING POWER TO A ROAD VEHICLE
SYSTÈME D'ALIMENTATION EN ÉNERGIE POUR L'INJECTION D'ÉNERGIE DANS UN VÉHICULE ROUTIER

(30) Priorität: 30.06.2022 DE 102022206720; 19.08.2022 DE 102022208633
(43) Veröffentlichungstag der Anmeldung: 05.02.2025
(73) Patentinhaber: Siemens Mobility GmbH, 80997 München (DE)
(72) Erfinder: SCHAUEN, Markus Gyusok, 81677 München (DE); HAHN, Gunter, 91353 Hausen (DE); JAKOBI, Steffen, 12524 Berlin (DE)
(74) Vertreter: Siemens Patent Attorneys
(86) Internationale Anmeldenummer: PCT/EP2023/062013
(87) Internationale Veröffentlichungsnummer: WO 2024/002563

(56) Entgegenhaltungen:
- DE-A1- 102017 215 135
- US-B2- 10 023 074

## Beschreibung

Die Erfindung betrifft ein Energieversorgungssystem zur Einspeisung von elektrischer Energie in ein elektrisch oder hybridelektrisch angetriebenes Straßenfahrzeug während der Fahrt auf einem elektrifizierten Fahrstreifen einer Straßenstrecke nach dem Oberbegriff des Patentanspruches 1.

Ein derartiges Energieversorgungssystem ist beispielsweise aus der Offenlegungsschrift DE 10 2017 215 135 A1 bekannt. Es umfasst eine zweipolige Oberleitungsanlage mit als elektrische Hin- und Rückleiter ausgebildeten Fahrdrähten zur Bereitstellung elektrischer Energie. Die Fahrdrähte sind entlang der Straßenstrecke parallel in einem Fahrdrahtabstand zueinander auf einer Fahrdrahthöhe oberhalb des Fahrstreifens angeordnet. Es umfasst ferner einen sich auf dem Straßenfahrzeug abstützenden Stromabnehmer mit einem aufrichtbaren Traggestänge. Zwei Kontaktbaugruppen lagern auf dem Traggestänge, welches mittels einer Hubvorrichtung aufrichtbar ist, um einen elektrischen Kontakt zwischen Kontaktbaugruppen und Fahrdrähten zu schließen. Eine Sensoranordnung erfasst, wenn ein Fahrdraht in einem Endabschnitt eines Arbeitsbereichs einer Kontaktbaugruppe aufliegt. Eine die Hubvorrichtung ansteuernde Steuereinheit ist dazu ausgebildet, ein Absenken des Traggestänges auszulösen, wenn die Sensoranordnung einen in einem Endabschnitt aufliegenden Fahrdraht erfasst, um den elektrischen Kontakt zwischen Kontaktbaugruppen und Fahrdrähten zu lösen.

Die aus DE 10 2017 215 135 A1 bekannte Sensoranordnung weist beispielsweise an den Kontaktbaugruppen beidendseitig jeweils ein Endkontaktelement auf. Ein gleichendseitig angeordnetes Paar der Endkontaktelemente ist mit einer Messvorrichtung verbunden, mittels der eine elektrische Zustandsgröße erfassbar ist. In Abhängigkeit der erfassten Zustandsgröße wird ermittelt, ob das Paar der Endkontaktelemente mit der Oberleitung kontaktiert ist. Hierdurch wird der Stromabnehmer abgesenkt, wenn durch eine Lenkungenauigkeit oder aufgrund eines Ausweich- oder Überholmanövers des Straßenfahrzeugs ein Fahrdraht an den Endabschnitt eines Arbeitsbereiches einer Kontaktbaugruppe gerät.

Aus wirtschaftlichen oder baulichen Gründen kann einer Oberleitungsanlage nicht auf dem gesamten Netz an Straßenstrecken errichtet werden. Es wechseln sich daher Streckenabschnitte mit elektrifizierten Fahrstreifen und Streckenabschnitte ohne solche ab. Bevor ein Straßenfahrzeug das Ende eines elektrifizierten Streckenabschnittes erreicht, muss der Stromabnehmer in einer elektrisch gesicherten Weise abgedrahtet werden, um Lichtbögen oder Beschädigungen durch nicht erfolgtes oder plötzliches Abdrahten des Stromabnehmers zu vermeiden. Hierzu muss der Fahrer des Straßenfahrzeugs mittels eines Hinweisschildes auf das Ende der Oberleitungsanlage aufmerksam gemacht und zum Abdrahten des Stromabnehmers aufgefordert werden.

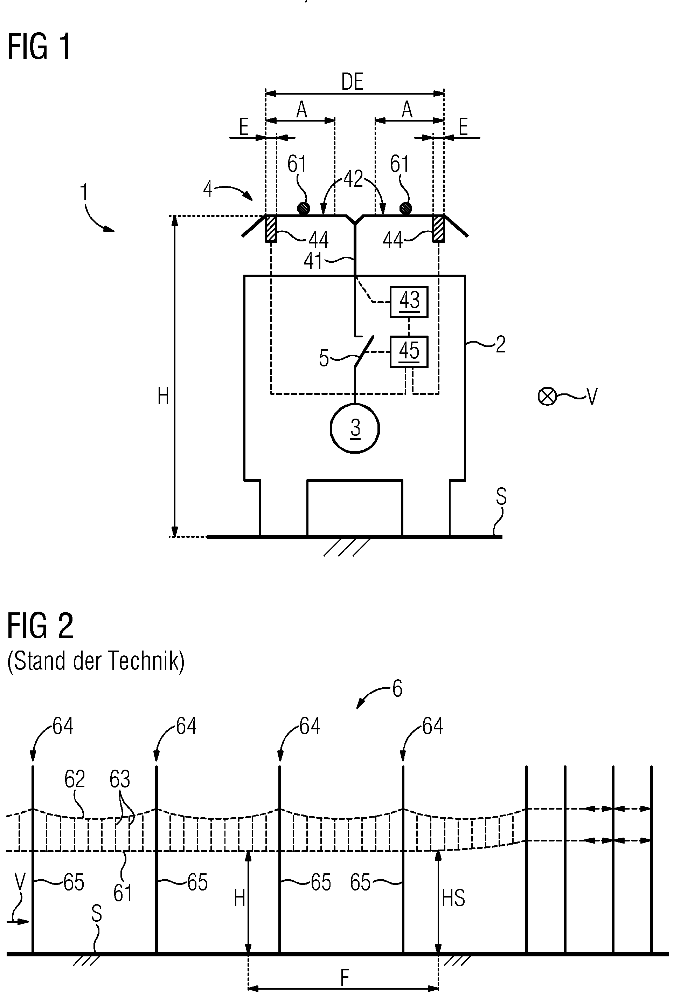

Für den Fall, dass das Hinweisschild nicht beachtet wird, ist es bei der Oberleitungsanlage 6 gemäß FIG 2 bekannt, die Fahrdrähte 61 auf einem Abdrahtabschnitt F der Straßenstrecke S von seiner vorbestimmten Fahrdrahthöhe H auf eine Fahrdrahthöhe HS mit Sicherheitszugabe gezielt hochzuführen. Die Sicherheitszugabe ist so bemessen, dass die maximale Arbeitshöhe des Stromabnehmers unterhalb liegt. Im Anschluss werden die aus Tragseilen 62, Hängern 63 und Fahrdrähten 61 bestehenden Längskettenwerke seitlich zu Ankerpunkten bzw. Spanneinrichtungen neben der Fahrbahn geführt.

Dieses Konzept setzt ausreichend Abstand in Fahrtrichtung V zwischen dem Ende der Oberleitungsanlage 6 und dem nächsten höhenbegrenzenden Bauwerk voraus, um ausreichend Zeit zum Abdrahten des Stromabnehmers 4 zu haben. Darüber hinaus ist ein hoher verfügbarer Bauraum für die Kettenwerke 61, 62, 63 sowie ein entsprechender Lichtraum für den Stromabnehmer 4 erforderlich. In Tunnelbauwerken und anderen in der Höhe beschränkten Bereichen ist dieses Prinzip somit nicht anwendbar. Es besteht außerdem der Nachteil, dass der Stromabnehmer 4 erst nach dem Erreichen seiner maximalen Arbeitshöhe automatisch mit dem Abdrahten beginnt und dabei immer noch vollen Traktionsstrom aus dem Fahrdraht 61 bezieht. Dadurch kann es bei Kontaktlösung vom Fahrdraht 61 zur Bildung von Lichtbögen und im Weiteren zu einer erhöhten Abnutzung, Verjüngung und Reduzierung der Standzeit des Fahrdrahtes 61 kommen.

Der Erfindung liegt daher die Aufgabe zugrunde ein Energieversorgungssystem der eingangs genannten Art bereitzustellen, welches die Nachteile des Standes der Technik überwindet.

Die Aufgabe wird erfindungsgemäß gelöst durch ein gattungsgemäßes Energieversorgungssystem mit den im kennzeichnenden Teil des Patentanspruches 1 angegebenen Merkmalen. Demnach weist in einem zum Lösen des elektrischen Kontakts zwischen Kontaktbaugruppen und Fahrdrähten vorgesehenen Abdrahtabschnitt der Straßenstrecke wenigsten einer der Fahrdrähte einen seitlich nach außen laufenden Abschnitt auf, wobei ein quer zu einer Fahrtrichtung des Fahrstreifens gemessener Abstand zwischen den Fahrdrähten längs des Abschnitts in Fahrtrichtung zunimmt. Der wenigstens eine Abschnitt kann bogenförmig, polygonförmig oder geradlinig seitlich nach außen laufen, um sich vom anderen Fahrdraht zu entfernen. Die Fahrdrahthöhe bleibt dabei unverändert. Bei geradlinigem Verlauf kann der Abschnitt des Fahrdrahtes unter einem spitzen Winkel zur Fahrtrichtung - also keil- oder V-förmig - seitlich nach außen laufen. Durch den seitlich nach außen laufenden Abschnitt eines Fahrdrahtes kommt bei fahrstreifentreuer Lenkung des Straßenfahrzeugs dieser Fahrdraht zwangsläufig auf dem äußeren Endabschnitt der diesen Fahrdraht kontaktierenden Kontaktbaugruppen zu liegen, was zur automatischen Kontaktlösung durch Abdrahten des Stromabnehmers führt. Der andere Fahrdraht kann geradlinig und parallel zur Fahrtrichtung verlaufen. Es brauchen weder Hinweisschilder noch die bauraumbedingten Einschränkungen des Standes der Technik beachtet zu werden.

In einer vorteilhaften Ausführungsform des erfindungsgemäßen Energieversorgungssystems weisen im Abdrahtabschnitt beide Fahrdrähte jeweils einen seitlich nach außen laufenden Abschnitt auf, wobei ein quer zu einer Fahrtrichtung des Fahrstreifens gemessener Abstand zwischen den Fahrdrähten längs der Abschnitte in Fahrtrichtung zunimmt. Die beiden Fahrdrähte können parallel zur Fahrtrichtung auf die Abschnitte zulaufen, während die Fahrdrähte in den Abschnitten symmetrisch von einer Fahrstreifenmitte seitlich nach außen auseinanderlaufen, sich als voneinander entfernen. Unabhängig von der seitlichen Relativlage des Straßenfahrzeugs bezüglich der Fahrstreifenmitte kommt ein Fahrdraht wenigstens eines oder beider Abschnitte auf einen äußeren Endabschnitt eines Arbeitsbereichs einer oder beider Kontaktbaugruppen zu liegen, wodurch der Absenkvorgang des Traggestells mit größerer Sicherheit ausgelöst wird.

In einer weiteren vorteilhaften Ausführungsform des erfindungsgemäßen Energieversorgungssystems ist ein seitlich nach außen laufender Abschnitt durch Abwinkeln eines Fahrdrahtes an einem Ablenkpunkt der Oberleitungsanlage gebildet. Ein Ablenkpunkt der Oberleitungsanlage kann beispielsweise durch einen mit einem Ausleger einer Quertrageinrichtung der Oberleitungsanlage verbundenen Seitenhalter gebildet sein, an dem der Fahrdraht festgeklemmt und von einem parallel zur Fahrtrichtung einlaufenden Verlauf in einen seitlich nach außen auslaufenden Verlauf abgewinkelt werden kann. Der Seitenhalter nimmt eine feste Raumposition ein und die durch die Abwinkelung des Fahrdrahts entstehenden Kräfte auf. In einem polygonartig verlaufenden Abschnitt kann der Fahrdraht auch an mehreren aufeinanderfolgenden Ablenkpunkten abgewinkelt sein. Weisen beide Fahrdrähte symmetrisch angeordnete, seitlich nach außen laufende Abschnitte auf, so kann der oder die Ablenkpunkte auch durch die Fahrdrähte verbindende Quertraversen gebildet sein. Die Länge einer ersten Quertraverse am Beginn der Abschnitte ist so groß wie der einlaufende Fahrdrahtabstand, während am Ende der seitlich auslaufenden Abschnitte eine zweite Quertraverse die Fahrdrähte auf größerem Abstand hält. Bei polygonartigen Verläufen der Abschnitte können weitere Quertraversen zwischen der ersten und der zweiten Quertraverse mit sukzessive zunehmender Länge angeordnet sein.

In einer weiteren vorteilhaften Ausführungsform des erfindungsgemäßen Energieversorgungssystems verzweigt sich ein Fahrdraht an einem Verzweigungspunkt der Oberleitungsanlage in einen in Fahrtrichtung verlaufenden Hauptzweig und in einen den seitlich nach außen laufenden Abschnitt bildenden Nebenzweig. Der Fahrdraht eines Nebenzweigs kann am Verzweigungspunkt mittels einer Stoßklemme am Fahrdraht des Hauptzweiges befestigt sein. Beim Befahren des Abdrahtabschnittes wandert der Auflagepunkt des Fahrdrahtes des Nebenzweiges auf dem Arbeitsbereich der Kontaktbaugruppe nach außen in Richtung seines äußeren Endabschnitts. Entsprechend wandern bei symmetrischer Anordnung der seitlich nach außen laufenden Abschnitte die Auflagepunkte der Fahrdrähte der Nebenzweige auf den Arbeitsbereichen der Kontaktbaugruppen jeweils nach außen in Richtung der jeweiligen äußeren Endabschnitte. Es kommt im Abdrahtabschnitt zwangsläufig zu einer Fahrdrahtauflage auf mindestens einem Endabschnitt, wodurch ein Absenken des Traggestells ausgelöst wird.

In einer weiteren vorteilhaften Ausführungsform des erfindungsgemäßen Energieversorgungssystems sind die Fahrdrähte an gegenüber liegenden Verzweigungspunkten durch eine einen vorbestimmten Fahrdrahtabstand haltende Quertraverse verbunden. Durch die Abspannung der Fahrdrähte der seitlich weggeführten Nebenzweige wirken an den Verzweigungspunkten Kräfte, welche diese unter Vergrößerung des regulären Fahrdrahtabstands voneinander weg bewegen würden, was die längenstabile Quertraverse gerade verhindert.

In einer anderen vorteilhaften Ausführungsform des erfindungsgemäßen Energieversorgungssystems sind die Fahrdrähte an gegenüber liegenden Verzweigungspunkten durch einen einen vorbestimmten Fahrdrahtabstand haltenden Seitenhalter einer Quertrageinrichtung der Oberleitungsanlage verbunden. Statt mit der oben beschriebenen Quertraverse kann der Fahrdrahtabstand an den Verzweigungspunkten auch durch die Seitenhalter einer Quertrageinrichtung gehalten werden.

In einer weiteren vorteilhaften Ausführungsform des erfindungsgemäßen Energieversorgungssystems ist jeder Nebenzweig vom jeweiligen Verzweigungspunkt zu mindestens einer weiteren Quertrageinrichtung geführt, an welcher bzw. welchen die Nebenzweige in einem Fahrdrahtabstand gehalten sind, der größer als ein Abschnittsabstand zwischen Endabschnitten der beiden Kontaktbaugruppen ist. Durch diese Wahl des Fahrdrahtabstands der Nebenzweige ist eine sichere Erfassung eines oder beider Fahrdrähte im vorangehenden, seitlich nach außen laufenden Abschnitt der Fahrdrähte gegeben. Bei Abdrahtabschnitten, auf welchen eine geringe Geschwindigkeit gefahren wird, können die Fahrdrähte der Nebenzweige vom Quertragwerk sofort wieder zurück zu den Fahrdrähten der Hauptzweige geführt und mit diesen über Stoßklemmen verbunden werden. Bei höheren Geschwindigkeiten werden die Fahrdrähte der Nebenzweige erst über ein oder mehrere weitere Quertragwerke neben den Fahrdrähten der Hauptzweige geführt, bevor diese wieder miteinander verbunden werden. Die Fahrdrähte des Haupt- und Nebenzweigs eines Potenzials können dabei über Hänger an einem gemeinsamen Tragseil befestigt sein und müssen nicht unbedingt parallel zueinander verlaufen.

In einer weiteren vorteilhaften Ausführungsform des erfindungsgemäßen Energieversorgungssystems ist ein Lasttrennschalter zwischen dem Stromabnehmer und einem Fahrzeugantrieb des Straßenfahrzeugs angeordnet. Dabei ist eine den Lasttrennschalter ansteuernde Steuereinheit dazu ausgebildet, ein Öffnen des Lasttrennschalters auszulösen, wenn die Sensoranordnung einen in einem Endabschnitt aufliegenden Fahrdraht erfasst, bevor ein Absenken des Traggestänges ausgelöst wird. Dadurch können der Fahrzeugantrieb und andere elektrische Fahrzeugkomponenten vom Stromabnehmer elektrisch getrennt werden, bevor der Stromabnehmer abgedrahtet wird. Dadurch können elektrisch undefinierte Zustände und damit einhergehende Lichtbögen vermieden werden.

Weitere Vorteile und Eigenschaften des erfindungsgemäßen Energieversorgungssystems ergeben sich aus im folgenden beschriebenen Ausführungsbeispielen anhand der Zeichnungen, in deren
- FIG 1: ein Straßenfahrzeug unter einer Oberleitungsanlage in einem erfindungsgemäßen Energieversorgungssystem mit Blick in Fahrtrichtung,
- FIG 2: eine Oberleitungsanlage gemäß dem Stand der Technik in Seitenansicht,
- FIG 3: ein erstes Ausführungsbeispiel einer Oberleitungsanlage eines erfindungsgemäßen Energieversorgungssystems in Draufsicht,
- FIG 4: ein zweites Ausführungsbeispiel einer Oberleitungsanlage eines erfindungsgemäßen Energieversorgungssystems in Draufsicht,
- FIG 5: ein drittes Ausführungsbeispiel einer Oberleitungsanlage eines erfindungsgemäßen Energieversorgungssystems in Draufsicht, und
- FIG 6: ein viertes Ausführungsbeispiel einer Oberleitungsanlage eines erfindungsgemäßen Energieversorgungssystems in Draufsicht
schematisch veranschaulicht sind.

Gemäß FIG 1 ist ein erfindungsgemäßes Energieversorgungssystem 1 zur Einspeisung von elektrischer Energie in ein elektrisch oder hybridelektrisch angetriebenes Straßenfahrzeug 2, beispielsweise ein schweres Nutzfahrzeug, während der Fahrt auf einem elektrifizierten Fahrstreifen S einer Straßenstrecke, beispielsweise einer mehrstreifigen Autobahn, vorgesehen und dazu ausgebildet. Es umfasst eine zweipolige Oberleitungsanlage 6 (vgl. auch FIG 2 bis FIG 6) mit als elektrische Hin- und Rückleiter ausgebildeten Fahrdrähten 61 zur Bereitstellung elektrischer Energie. Die Fahrdrähte 61 sind entlang der Straßenstrecke parallel in einem Fahrdrahtabstand D1 zueinander auf einer Fahrdrahthöhe H oberhalb des Fahrstreifens S angeordnet. Es umfasst ferner einen sich auf dem Straßenfahrzeug 2 abstützenden Stromabnehmer 4 mit einem gelenkigen Traggestänge 41. Zwei Kontaktbaugruppen 42 lagern auf dem Traggestänge 41, welches mittels einer Hubvorrichtung 43 aufrichtbar ist, um einen elektrischen Kontakt zwischen Kontaktbaugruppen 42 und Fahrdrähten 41 zu schließen. Eine Sensoranordnung 44 erfasst, wenn ein Fahrdraht 61 in einem äußeren Endabschnitt E eines Arbeitsbereichs A einer Kontaktbaugruppe 42 aufliegt. Eine die Hubvorrichtung 43 ansteuernde Steuereinheit 45 ist dazu ausgebildet, ein Absenken des Traggestänges 41 auszulösen, wenn die Sensoranordnung 44 einen in einem Endabschnitt E aufliegenden Fahrdraht 61 erfasst, um den elektrischen Kontakt zwischen Kontaktbaugruppen 42 und Fahrdrähten 61 zu lösen.

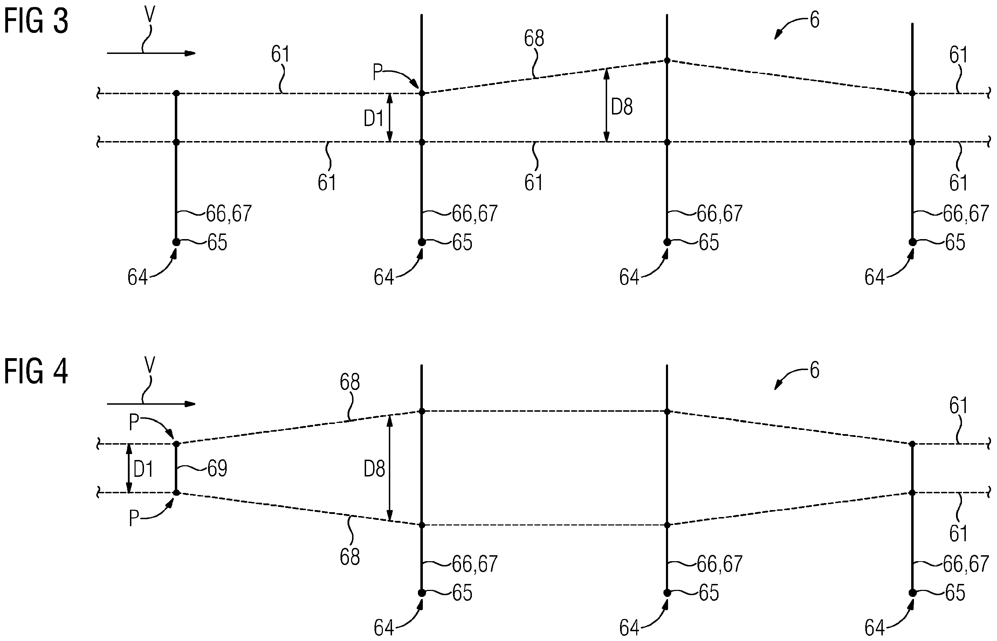

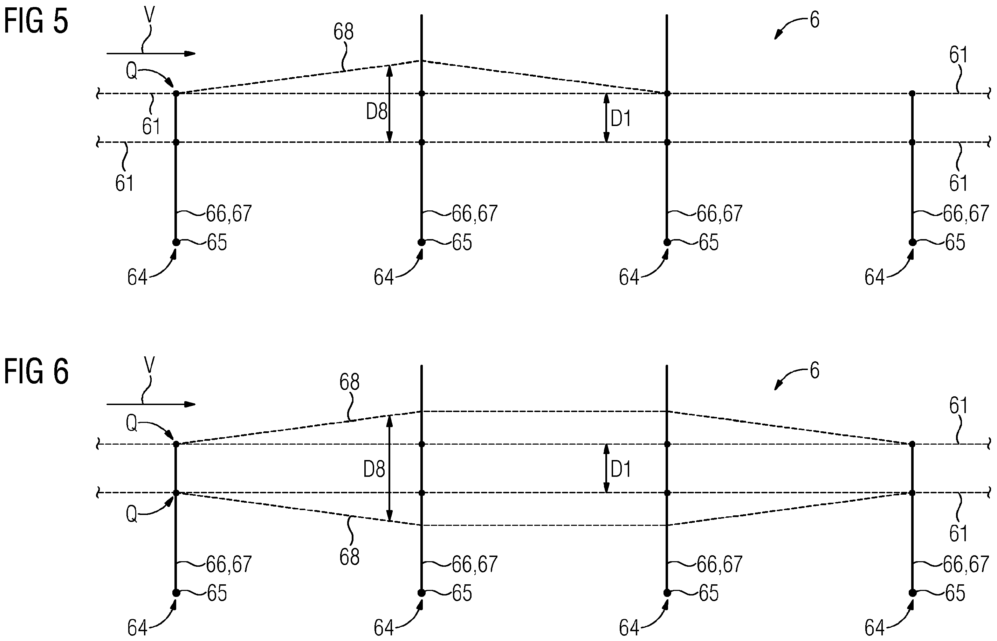

Erfindungsgemäß weist wenigstens einer der Fahrdrähte 61 der Oberleitungsanlage 6 gemäß FIG 2 bis FIG 6 in einem zum Lösen des elektrischen Kontakts zwischen Kontaktbaugruppen 42 und Fahrdrähten 61 vorgesehenen Abdrahtabschnitt F der Straßenstrecke einen seitlich nach außen laufenden Abschnitt 68 auf, wobei ein quer zu einer Fahrtrichtung V des Fahrstreifens S gemessener Abstand D8 zwischen den Fahrdrähten 61 längs des Abschnitts 68 in Fahrtrichtung V zunimmt. Gemäß FIG 3 und FIG 5 ist weist nur einer der beiden Fahrdrähte 61 einen seitlich nach außen laufenden Abschnitt 68 auf, während gemäß FIG 4 und FIG 6 beide Fahrdrähte 61 solche Abschnitte 68 aufweisen. Der Abschnitt 68 kann bogenförmig, polygonförmig oder gemäß FIG 3 bis FIG 6 geradlinig seitlich nach außen laufen, um sich vom anderen Fahrdraht 61 zu entfernen. Die Fahrdrahthöhe H bleibt dabei unverändert. Bei geradlinigem Verlauf kann der Abschnitt 68 des Fahrdrahtes 61 unter einem spitzen Winkel zur Fahrtrichtung V - also keil- oder V-förmig - seitlich nach außen laufen. Die Sensoranordnung 44 ist zur Erfassung eines in einem Endabschnitt E aufliegenden Fahrdrahtes 68 ausgebildet. Schließlich ist die Steuereinheit 45 dazu ausgebildet, ein Absenken des Traggestänges 41 auszulösen, wenn die Sensoranordnung 44 einen in einem Endabschnitt E aufliegenden Fahrdraht 68 erfasst. Durch die Anordnung der Fahrdrahtabschnitte 68 liegt selbst bei fahrstreifentreuer Lenkung des Straßenfahrzeugs 2 zwangsläufig zunächst mindestens einer der Fahrdrähte 68 oder 61, vorzugsweise beide, in den Endabschnitten E ihrer Kontaktbaugruppen 42 auf, was zur automatischen Kontaktlösung durch Abdrahten des Stromabnehmers 4 führt.

Gemäß FIG 3 ist ein seitlich nach außen laufender Abschnitt 68 und gemäß FIG 4 sind zwei seitlich nach außen laufende Abschnitte 68 durch Abwinkeln eines Fahrdrahtes 61 an einem Ablenkpunkt P der Oberleitungsanlage 6 gebildet. Ein Ablenkpunkt P der Oberleitungsanlage 6 kann beispielsweise durch einen mit einem Ausleger 66 einer Quertrageinrichtung 64 der Oberleitungsanlage 6 verbundenen Seitenhalter 67 gebildet sein, an dem der Fahrdraht 61 festgeklemmt und von einem parallel zur Fahrtrichtung V einlaufenden Verlauf in einen seitlich nach außen auslaufenden Verlauf abgewinkelt werden kann. Der Seitenhalter 67 nimmt eine feste Raumposition ein und die durch die Abwinkelung des Fahrdrahts 61 entstehenden Kräfte auf. Weisen beide Fahrdrähte 61 gemäß FIG 4 symmetrisch angeordnete, seitlich nach außen laufende Abschnitte 68 auf, so kann der oder die Ablenkpunkte P auch durch die Fahrdrähte 61 verbindende Quertraversen 69 gebildet sein. Die Länge einer ersten Quertraverse 69 am Beginn der Abschnitte 68 ist so groß wie der einlaufende Fahrdrahtabstand D1, während am Ende der seitlich auslaufenden Abschnitte 68 eine Quertrageinrichtung 64 angeordnet ist.

Gemäß FIG 5 verzweigt sich ein Fahrdraht 61 an einem Verzweigungspunkt Q der Oberleitungsanlage 6 in einen in Fahrtrichtung V verlaufenden Hauptzweig und in einen den seitlich nach außen laufenden Abschnitt 68 bildenden Nebenzweig. Gemäß FIG 6 verzweigen sich beide Fahrdrähte 61 an jeweils einem Verzweigungspunkt Q in jeweils einen in Fahrtrichtung V verlaufenden Hauptzweig und einen den seitlich nach außen laufenden Abschnitt 68 bildenden Nebenzweig. Der Fahrdraht 68 eines Nebenzweigs kann am Verzweigungspunkt Q mittels einer Stoßklemme am Fahrdraht 61 des Hauptzweiges befestigt sein. Beim Befahren des Abdrahtabschnittes F wandert der Auflagepunkt des Fahrdrahtes 68 des Nebenzweiges auf dem Arbeitsbereich A der Kontaktbaugruppe 42 nach außen in Richtung seines äußeren Endabschnitts E. Entsprechend wandern bei symmetrischer Anordnung der seitlich nach außen laufenden Abschnitte 68 die Auflagepunkte der Fahrdrähte 68 der Nebenzweige auf den Arbeitsbereichen A der Kontaktbaugruppen 42 jeweils nach außen in Richtung der jeweiligen äußeren Endabschnitte E. Es kommt im Abdrahtabschnitt F zwangsläufig zu einer Fahrdrahtauflage auf mindestens einem Endabschnitt E, wodurch ein Absenken des Traggestells 41 ausgelöst wird.

Gemäß FIG 5 und FIG 6 kann an den Verzweigungspunkten Q je ein die Fahrdrähte 61 auf Fahrdrahtabstand D1 haltender Seitenhalter 67 einer Quertrageinrichtung 64 der Oberleitungsanlage 6 befestigt sein. Durch die Abspannung der seitlich weggeführten Fahrdrähte 68 der Nebenzweige wirken an den Verzweigungspunkten Q Kräfte, welche diese unter Vergrößerung des regulären Fahrdrahtabstands D1 voneinander weg bewegen würden, was der Seitenhalter 67 gerade verhindert.

Gemäß FIG 4 ist der abgewinkelte Fahrdraht 68 vom Ablenkpunkt P und gemäß FIG 6 der Fahrdraht 68 des Nebenzweiges vom Verzweigungspunkt Q zu mindestens einer weiteren Quertrageinrichtung 64 geführt, an welcher bzw. welchen der Fahrdraht 68 in einem Fahrdrahtabstand D8 gehalten sind, der größer als ein Abschnittsabstand DE zwischen Endabschnitten E der beiden Kontaktbaugruppen 42 ist. Durch diese Wahl des Fahrdrahtabstands D8 ist eine sichere Erfassung eines oder beider Fahrdrähte 68 im vorangehenden, auseinanderlaufenden Abschnitt 68 gegeben. Bei Abdrahtabschnitten F, auf welchen eine geringe Geschwindigkeit gefahren wird, können gemäß FIG 3 und FIG 5 die seitlichen Fahrdrähte 68 von der Quertrageinrichtung 64 sofort wieder zurück zu den Fahrdrähten 61 geführt und mit diesen über Stoßklemmen verbunden werden. Für höhere Geschwindigkeiten werden die seitlichen Fahrdrähte 68 gemäß FIG 4 und FIG 6 erst über ein oder mehrere weitere Quertrageinrichtungen 64 neben den Fahrdrähten 61 geführt, bevor diese wieder miteinander verbunden werden.

Gemäß FIG 1 ist im Straßenfahrzeug 2 ein Lasttrennschalter 5 zwischen dem Stromabnehmer 4 und einem Fahrzeugantrieb 3 des Straßenfahrzeugs 2 angeordnet. Dabei ist eine den Lasttrennschalter 5 ansteuernde Steuereinheit 45 dazu ausgebildet, ein Öffnen des Lasttrennschalters 5 auszulösen, wenn die Sensoranordnung 44 einen in einem äußeren Endabschnitt E aufliegenden Fahrdraht 68 erfasst, bevor ein Absenken des Traggestänges 41 ausgelöst wird. Dadurch können der Fahrzeugantrieb 3 und andere elektrische Fahrzeugkomponenten vom Stromabnehmer 4 elektrisch getrennt werden, bevor der Stromabnehmer 4 abgedrahtet wird, wodurch elektrisch undefinierte Zustände und damit einhergehende Lichtbögen vermieden werden.

## Patentansprüche

1. Energieversorgungssystem (1) zur Einspeisung von elektrischer Energie in ein elektrisch oder hybridelektrisch angetriebenes Straßenfahrzeug (2) während der Fahrt auf einem Fahrstreifen (S) einer Straßenstrecke, umfassend
- eine zweipolige Oberleitungsanlage (6) mit als elektrische Hin- und Rückleiter ausgebildeten Fahrdrähten (61) zur Bereitstellung elektrischer Energie, welche entlang der Straßenstrecke auf einer vorbestimmten Fahrdrahthöhe (H) über dem Fahrstreifen (S) angeordnet sind, und
- einen Stromabnehmer (4) mit einem sich auf dem Straßenfahrzeug (2) gelenkig abstützenden Traggestänge (41), mit zwei auf dem Traggestänge (41) gelagerten Kontaktbaugruppen (42), mit einer Hubvorrichtung (43) zum Aufrichten des Traggestänges (41), um einen elektrischen Kontakt zwischen Kontaktbaugruppen (42) und Fahrdrähten (61) zu schließen, mit einer Sensoranordnung (44) zur Erfassung eines in einem äußeren Endabschnitt (E) eines Arbeitsbereichs (A) einer Kontaktbaugruppe (42) aufliegenden Fahrdrahtes (61), und mit einer die Hubvorrichtung (43) ansteuernden Steuereinheit (45) zur Auslösung eines Absenkens des Traggestänges (41), wenn die Sensoranordnung (44) einen in einem Endabschnitt (E) aufliegenden Fahrdraht (61) erfasst, um den elektrischen Kontakt zwischen Kontaktbaugruppen (42) und Fahrdrähten (61) zu lösen, **dadurch gekennzeichnet,**
- **dass** in einem zum Lösen des elektrischen Kontakts zwischen Kontaktbaugruppen (42) und Fahrdrähten (61) vorgesehenen Abdrahtabschnitt (F) der Straßenstrecke wenigsten einer der Fahrdrähte (61) einen seitlich nach außen laufenden Abschnitt (68) aufweist,
- wobei ein quer zu einer Fahrtrichtung (V) des Fahrstreifens (S) gemessener Abstand (D8) zwischen den Fahrdrähten (61) längs des Abschnitts (68) in Fahrtrichtung (V) zunimmt.

2. Energieversorgungssystem (1) nach Anspruch 1,
- wobei im Abdrahtabschnitt (F) beide Fahrdrähte (61) jeweils einen seitlich nach außen laufenden Abschnitt (68) aufweisen,
- wobei ein quer zu einer Fahrtrichtung (V) des Fahrstreifens (S) gemessener Abstand (D8) zwischen den Fahrdrähten (61) längs der Abschnitte (68) in Fahrtrichtung (V) zunimmt.

3. Energieversorgungssystem (1) nach Anspruch 1 oder 2,
- wobei ein seitlich nach außen laufender Abschnitt (68) durch Abwinkeln eines Fahrdrahtes (61) an einem Ablenkpunkt (P) der Oberleitungsanlage (6) gebildet ist.

4. Energieversorgungssystem (1) nach Anspruch 1 oder 2,
- wobei sich ein Fahrdraht (61) an einem Verzweigungspunkt (Q) der Oberleitungsanlage (6) in einen in Fahrtrichtung (V) verlaufenden Hauptzweig und in einen den seitlich nach außen laufenden Abschnitt (68) bildenden Nebenzweig verzweigt.

5. Energieversorgungssystem (1) nach Anspruch 4,
- wobei die Fahrdrähte (61) an gegenüber liegenden Verzweigungspunkten (Q) durch eine einen vorbestimmten Fahrdrahtabstand (D1) haltende Quertraverse (69) verbunden sind.

6. Energieversorgungssystem (1) nach Anspruch 4,
- wobei die Fahrdrähte (61) an gegenüber liegenden Verzweigungspunkten (Q) durch einen einen vorbestimmten Fahrdrahtabstand (D1) haltenden Seitenhalter (67) einer Quertrageinrichtung (64) der Oberleitungsanlage (6) verbunden sind.

7. Energieversorgungssystem (1) nach Anspruch 6,
- wobei jeder seitlich nach außen laufende Abschnitt (68) vom jeweiligen Verzweigungspunkt (Q) zu mindestens einer weiteren Quertrageinrichtung (64) geführt ist, an welcher bzw. welchen die Fahrdrähte (68) der Nebenzweige in einem Fahrdrahtabstand (D8) gehalten sind, der größer als ein Abschnittsabstand (DE) zwischen Endabschnitten (E) der beiden Kontaktbaugruppen (42) ist.

8. Energieversorgungssystem (1) nach einem der Ansprüche 1 bis 7,
- wobei ein Lasttrennschalter (5) zwischen dem Stromabnehmer (4) und einem Fahrzeugantrieb (3) des Straßenfahrzeugs (2) geschaltet ist,
- wobei eine den Lasttrennschalter (5) ansteuernde Steuereinheit (45) ein Öffnen des Lasttrennschalters (5) auslöst, wenn die Sensoranordnung (44) einen in einem Endabschnitt (E) aufliegenden Fahrdraht (68) erfasst, bevor ein Absenken des Traggestänges (41) ausgelöst wird.

## Claims

1. Power supply system (1) for feeding electrical energy into an electrically or hybrid-electrically driven road vehicle (2) while travelling on a lane (S) of a stretch of road, comprising
- a two-pole overhead line system (6) with contact wires (61) for providing electrical energy, which are embodied as electrical supply and return conductors and are arranged along the stretch of road at a predetermined contact wire height (H) above the lane (S), and
- a current collector (4) with an articulated support linkage (41) braced against the road vehicle (2), with two contact assemblies (42) mounted on the support linkage (41), with a lifting apparatus (43) for aligning the support linkage (41) in order to establish electrical contact between contact assemblies (42) and contact wires (61), with a sensor arrangement (44) for detecting a contact wire (61) lying in an outer end section (E) of an operating region (A) of a contact assembly (42), and with a control unit (45) which controls the lifting apparatus (43) to trigger a lowering of the support linkage (41) when the sensor arrangement (44) detects a contact wire (61) lying in an outer end section (E) in order to break electrical contact between contact assemblies (42) and contact wires (61),
**characterised in that**
- in a dewiring section (F) of the stretch of road provided for breaking the electrical contact between contact assemblies (42) and contact wires (61), at least one of the contact wires (61) has a section (68) running laterally outward,
- wherein a distance (D8) measured transversely to a direction of travel (V) of the lane (S) increases between the contact wires (61) along the length of the section (68) in the direction of travel (V).

2. Power supply system (1) according to claim 1,
- wherein both contact wires (61) each have a section (68) running laterally outward in the dewiring section (F),
- wherein a distance (D8) measured transversely to a direction of travel (V) of the lane (S) increases between the contact wires (61) along the length of the sections (68) in the direction of travel (V).

3. Power supply system (1) according to claim 1 or 2,
- wherein a section running (68) running laterally outward is formed by bending a contact wire (61) at a deflection point (P) of the overhead line system (6).

4. Power supply system (1) according claim 1 or 2,
- wherein, at a deflection point (Q) of the overhead line system (6), a contact wire (61) branches out into a main line running in a direction of travel (V) and into a branch line forming the section (68) running laterally outward.

5. Power supply system (1) according to claim 4,
- wherein the contact wires (61) are connected at deflection points (Q) which lie opposite one another by way of a transverse cross-member (69) which maintains a predetermined contact wire distance (D1).

6. Power supply system (1) according to claim 4,
- wherein the contact wires (61) are connected at deflection points (Q) which lie opposite one another by way of a lateral holder (67) of a transverse cross-member of the overhead line system (67), which holder maintains a predetermined contact wire distance (D1).

7. Power supply system (1) according to claim 6,
- wherein each section (68) running laterally outward is guided from the respective deflection point (Q) to at least one further transverse support facility (64), at which the contact wires (68) of the branch line are held at a contact wire distance (D8) which is greater than a section distance (DE) between end sections (E) of the two contact assemblies (42).

8. Power supply system (1) according to one of claims 1 to 7,
- wherein a load break switch (5) is connected between the current collector (4) and a vehicle drive (3) of the road vehicle (2),
- wherein a control unit (45) controlling the load break switch (5) triggers an opening of the load break switch (5) when the sensor arrangement (44) detects a contact wire (68) lying in an end section (E) before a lowering of the support linkage (41) is triggered.

## Revendications

1. Système (1) d'alimentation en énergie pour l'injection d'énergie électrique dans un véhicule (2) routier électrique ou hybride pendant la circulation sur une file (S) d'une voie routière, comprenant
- une installation (6) bipolaire à caténaire comprenant des fils (61) de contact constitués en conducteurs électriques aller et retour pour disposer d'énergie électrique, qui sont disposés le long de la voie routière à une hauteur (H) de contact déterminée à l'avance au-dessus de la file (S), et
- un appareil (4) de prise de courant ayant une barre (41) porteuse s'appuyant de manière articulée sur le véhicule (2) routier, comprenant deux modules (42) de contact montés sur la base (41) porteuse, comprenant un dispositif (43) de levage pour dresser la barre (41) porteuse, afin de fermer un contact électrique entre des modules (42) de contact et des fils (61) de contact, comprenant un agencement (44) capteur de détection d'un fil (61) de contact s'appliquant dans un tronçon (E) d'extrémité extérieur d'une zone (A) de travail d'un module (42) de contact, et comprenant une unité (45) de commande commandant le dispositif (43) de levage pour le déclenchement d'un abaissement de la barre (41) porteuse, lorsque l'agencement (44) capteur détecte un fil (61) de contact s'appliquant dans un tronçon (E) d'extrémité, afin de faire cesser le contact électrique entre des modules (42) de contact et des fils (61) de contact,
**caractérisé**
- **en ce que**, dans un tronçon (F), prévu pour faire cesser le contact entre des modules (42) de contact et des fils (61) de contact, de la voie routière, au moins l'un des fils (61) de contact a un tronçon (68) s'étendant latéralement vers l'extérieur,
- dans lequel une distance (D8), mesurée transversalement à un sens (V) de circulation de la file (S), entre les fils (61) de contact, augmente le long du tronçon (68) dans le sens (V) de circulation.

2. Système (1) d'alimentation en énergie suivant la revendication 1,
- dans lequel, dans le tronçon (F), les deux fils (61) de contact ont chacun un tronçon (68) s'étendant latéralement vers l'extérieur,
- dans lequel, une distance (D8), mesurée transversalement à un sens (V) de circulation de la file (S), entre les fils (61) de contact, augmente le long des tronçons (68) dans le sens (V) de circulation.

3. Système (1) d'alimentation en énergie suivant la revendication 1 ou 2,
- dans lequel un tronçon (68) s'étendant latéralement vers l'extérieur est formé par un coude d'un fil (61) de contact en un point (P) de déviation de l'installation (6) à caténaire.

4. Système (1) d'alimentation en énergie suivant la revendication 1 ou 2,
- dans lequel un fil (61) de contact en un point (Q) de bifurcation de l'installation (6) à caténaire bifurque en une branche principale s'étendant dans le sens (V) de circulation et en une branche auxiliaire formant le tronçon (68) s'étendant latéralement vers l'extérieur.

5. Système (1) d'alimentation en énergie suivant la revendication 4,
- dans lequel les fils (61) de contact en des points (Q) de bifurcation opposés sont reliés par une traverse (69), maintenant une distance (D1), déterminée à l'avance, entre les fils de contact.

6. Système (1) d'alimentation en énergie suivant la revendication 4,
- dans lequel les fils (61) de contact sont reliés, en des points (Q) de bifurcation opposés, par un support (67) latéral, maintenant une distance (D1), déterminée à l'avance, entre les fils de contact, d'un dispositif (64) de support transversal de l'installation (6) à caténaire.

7. Système (1) d'alimentation en énergie suivant la revendication 6,
- dans lequel chaque tronçon (68) s'étendant vers l'extérieur latéralement va du point (Q) de bifurcation respectif à au moins un autre dispositif (64) de support transversal, où les fils (68) de contact des branches auxiliaires sont maintenus à une distance (D8) entre fils de contact, qui est plus grande qu'une distance (DE) entre des tronçons (E) d'extrémité des deux modules (42) de contact.

8. Système (1) d'alimentation en énergie suivant l'une des revendications 1 à 7,
- dans lequel un interrupteur (5) de coupure en charge est monté entre l'appareil (4) de prise de courant et un entraînement (3) du véhicule (2) routier,
- dans lequel une unité (45) de commande, commandant l'interrupteur (5) de coupure en charge, déclenche une ouverture de l'interrupteur (5) de coupure en charge, si l'agencement (44) de capteur détecte un fil (68) de contact s'appliquant à un tronçon (E) d'extrémité, avant qu'un abaissement de la barre (41) porteuse ne soit déclenché.
